# EUROPEAN PATENT SPECIFICATION

(11) **EP 0 459 511 B1**
(45) Date of publication and mention of the grant of the patent: **13.12.1995**
(21) Application number: 91108952.2
(22) Date of filing: 31.05.1991
(51) Int. Cl.: G01N 35/00, G01N 27/26, C12Q 1/00

(54) **Apparatus for measuring concentration of test substance in a liquid**
Vorrichtung zur Messung der Konzentration einer Testsubstanz in einer Flüssigkeit
Appareil de mesure de la concentration d'une substance dans un liquide

(30) Priority: 31.05.1990 JP 142070/90
(43) Date of publication of application: 04.12.1991
(73) Proprietor: DAIKIN INDUSTRIES, LTD., Kita-ku, Osaka 530 (JP)
(72) Inventor: Mukai, Toji, Yasu-gun, Shiga, 520-24 (JP); Terawaki, Hiroshi, Sakai-shi, Osaka 591 (JP); Nakano, Hitonaga, Kouga-gun, Shiga, 520-32 (JP)
(74) Representative: Prüfer, Lutz H., Dipl.-Phys.

(56) References cited:
- EP-A- 0 068 717
- EP-A- 0 373 629
- GB-A- 2 095 409
- US-A- 3 926 765
- US-A- 4 929 330

## Description

This invention relates to a concentration measuring apparatus for measuring the concentration of test substances in a liquid as given in the preamble of claim 1.

Such a concentration measuring apparatus is known from the UK-A-2 095 409. In the known concentration measuring apparatus the enzyme electrode unit is fixed in the main body, the test substance flows into the electrodes through the thin film by capillary action, the thin film is stationary, and the thin film is pressed against a bottom part by the electrodes so that the film can not be moved.

In the EP-A-0 373 629 being published after the priority date of the present application but having an earlier priority rank a test apparatus for measuring concentration of test substance in liquid is described. It includes a main body, an enzyme electrode unit provided in a predetermined position of the main body movably up and down, a thin film in which a plurality of openings for passing through test solutions are formed at predetermined distances, each opening being covered by an assistance membrane for concentration measurement, driving means for moving the film in a predetermined direction, and a swing member pressing the electrode against the film adapted to place the electrode unit over the film during measurement.

It is known that physiologically active substances have a caracteristic of being capable of selectively detecting a very complicated organic compound, protein or the like with high sensibility. With attention directed to this characteristic, research and develop-ment have been made on the measurement of such organic compounds, proteins or the like with the use of an enzyme electrode unit having base electrodes on which a physiologically active substance (hereinafter referred to as an enzyme) is immobilized.

When measuring a test substance in a liquid with the use of the enzyme electrode unit above-mentioned, the test substance is oxidized or reduced in the presence of such enzyme. The concentration of the test substance is determined by applying predetermined processing to an electric signal output, corresponding to the amount of a substance produces or consumed in such oxidation or reduction, from the enzyme electrode unit. The oxidation or reduction depends not only on the amount of the test substance but also on the amount of substance which is needed for oxidation or reduction. It is accordingly impossible to generate or consume an amount of substance corresponding to the amount of the test substance when the substance which is needed for oxidation or reduction is lacking. As a result, concentration measurement results of the test substance become inaccurate. For instance when the concentration of glucose is measured using an enzyme electrode unit consisting of glucose oxidase as an enzyme and a platinum electrode and a silver electrode as base electrodes, the following reaction occurs. 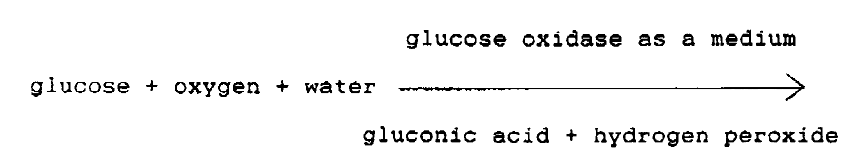
As is apparent from the reaction equation, oxygen is consumed and hydrogen peroxide is produced. So the concentration of glucose is determined by measuring the amount of hydrogen peroxide produced or oxygen consumed. Accordingly, the upper limit of concentration which can be measured, is determined dependent on the amount of a substance used for the oxidation or reduction, for example the amount of oxygen.

In view of the foregoing, it has been proposed to increase the concentration measuring limit by limiting the penetration rate of a test substance by a diffusion-limiting membrane mounted on the surface of enzyme-immobilized membrane. It has also been proposed that a membrane which has a separating function for interfering substances contained in a test solution which adhere to the diffusion-limiting membrane, a lower diffusion-limiting function than the diffusion-limiting membrane, and the function for permitting deposition of test solutions without contacting the enzyme electrode unit or the like be removably mounted on the surface of the diffusion-limiting membrane.

With the use of such an arrangement, the quantity of test substance to be oxidized or reduced in the presence of enzyme is limited even when the concentration of the test substance in the test solution is high, and the necessary amount of substance which is needed for oxidation or reduction is accordingly decreased. The removable membrane is preferably exchanged with a new membrane at every concentration measurement when the concentration of test substance in the test solution includ as large amounts of interfering substances. In view of the foregoing, the inventors et al. proposed to form plural openings for passing through test solutions in a thin film and to cover each opening with a membrane which has the main function of separating interfering substances contained in a test solution. In this case, the enzyme electrode unit must be arranged to be movable in an up and down manner to prevent rubbing of the thin film with the enzyme electrode unit when the thin film is moved so as to lengthen the life span of the enzyme electrode. When the enzyme electrode unit is arranged to be movable in an up and down manner, the enzyme electrode unit and the membrane covering the opening of the thin film must contact one another. To obtain good contact, the thin film must be applied with tension in both sides thereof with respect to contacting portion of the thin film with the enzyme electrode unit. When the thin film moving portion of the casing which houses the thin film is to small, the location for providing tension applying mechanisms is limited and the tension applying mechanisms must be smaller. As a result, the tension applying mechanisms meeting the above mentioned requirements can not be realized easily. Also, the disadvantage arises that necessary force for moving the thin film becomes greater because the tension applied to the thin film functions as a resistance with respect to moving of the thin film.

When tension is applied to the thin film, contact of the enzyme electrode and the thin film varies somewhat, the disadvantage arises that variation in the measured value becomes greater.

The foregoing is described under the assumption that the thin film is an elongate film, similar disadvantages arises when the thin film is a disk shaped film or the like.

The description hereinbefore which has discussed mainly the case of concentration measuring of a test substance when using an enzyme electrode unit, may be also applied to the case of concentration measuring of a test substance with using the other electrode unit, and may also cause the similar problems.

It is an object of the present invention to simplify the mechanism for contacting an assistance membrane for concentration measurement adhered on a thin film with an enzyme electrode unit.

It is another object of the present invention to remarkably decrease the variation of contacting conditions of an assistance membrane for concentration measurement adhered on a thin film with an enzyme electrode unit.

In order to the objects above-mentioned, the concentration measuring apparatus for measuring the concentration of test substances in a liquid in accordance with the present invention comprises the features of claim 1.

According to the concentration measuring apparatus for measuring the concentration of a test substance in a liquid having the arrangement above-mentioned, the thin film is housed in a predetermined position of the main body, then the thin film is moved a predetermined distance when the enzyme electrode unit is moved down. Thereafter, the enzyme electrode unit is moved up, to thereby accomplish good contact between the assistance membrane and the enzyme electrode unit because the thin film is regulated by the flexible inner projections forming flexible pressing means. In this condition, the concentration measurement is performed based upon the quantity of test substance diffused to the enzyme electrode unit through the assistance membrane. Variation in the concentration measurements can be remarkably decreased because the contact between the assistant membrane and the enzyme electrode unit is obtained with good reproducibility. A guiding portion of the housing for guiding movement of the thin film is prevented from enlarging because of the location of the pair of inner projections which are provided at the guiding portion of the housing. The inner projections are securely prevented from contacting test solution even when the thin film is moved because the pair of inner projections are arranged opposite one another with a predetermined distance therebetween.

The flexible pressing means at their distal ends can have a shape corresponding to the shape of the edge portion of the enzyme electrode unit which is mised in contact with and underneath the film. When this arrangement is employed, the thin film is in contact with the enzyme electrode unit in good condition because the thin film is regulated by the flexible pressing means, thereby to remarkably decrease variation in the concentration measurement.

It is preferred that the thin film is raised by raising means at a position opposite to the opening for deposition and a second pair of inner projections, called assistance inner projections are further provided for that purpose at a position a little distance removed from the inner projections towards the opening for the deposition. The pair of assistance inner projections are opposite one another in a square crossing direction to the direction of movement of the thin film. When this arrangement is employed, the operability for deposition of the test solution is improved because the thin film is raised at the depositing position. Good contact is maintained between the thin film and the enzyme electrode unit due to the pair of inner projections because the effect caused by the raising of the thin film at the depositing position by the pair of assistance inner projections is controlled.

It is also preferred that the bottom surface of the assistance inner projections, when viewed in cross section, be positioned below the level of the bottom surface of the inner projections. When this arrangement is employed, better contact is maintained between the thin film and the enzyme electrode unit due to the pair of inner projections. The effect caused by the raising of the thin film at the depositing position is securely controlled by the pair of assistance inner projections, even when the thin film is forcibly raised at the position of the opening for deposition.

It is further preferred that a cartridge is further housed on the main body, and the cartridge has the flexible pressing means at a predetermined position of an upper portion thereof and houses the thin film in a movable manner in a predetermined direction. When this arrangement is employed, better contact is maintained between the thin film and the enzyme electrode unit due to the flexible pressing means being provided at the predetermined position of the upper portion thereof.

It is still further preferred that the cartridge has an elongated opening including the opening for deposition at its top surface and has an opening at its bottom surface for permitting the enzyme electrode unit to move upwardly therein. The opening for permitting the enzyme electrode unit to move upwardly therein is not limited to an opening formed only in a partial region of the bottom surface of the cartridge. The opening for permitting the enzyme electrode unit to enter therein may be a large opening formed in the entire region of the bottom surface of the cartridge. When this arrangement is employed, test solution deposited on the thin film is prevented from touching the cartridge when the thin film is advanced to move opposite the opening for further deposition of test solution. This avoids lowering the accuracy for measuring concentration .

The above, and other objects, features and advantages of this invention will be apparent from the following detailed description of illustrative embodiments which is to be read in connection with the accompanying drawings.
Figure 1 is a partial section perspective view showing a cartridge in which an elongate film is housed;
Figure 2 is a cross section view along a line II-II in Fig. 1;
Figure 3 is a cross section view along line III-III in Fig. 1;
Figure 4 is a perspective view showing the elongate film;
Figure 5 is a partial section perspective view of a concentration measuring apparatus in accordance with a first embodiment of the present invention;
Figure 6 is a partial vertical section view along a line VI-VI in Fig. 5 showing a main portion of the concentration measuring apparatus;
Figure 7 is a partial vertical section view along a line VII-VII in Fig. 5 showing a main portion of the concentration measuring apparatus;
Figure 8 is a partial vertical section view showing a main portion of the concentration measuring apparatus in accordance with a modified embodiment of the present invention;
Figure 9 is a partial vertical section view of a concentration measuring apparatus in accordance with a second embodiment of the present invention;
Figure 10 is a plan view of a cartridge; and
Figure 11 is a cross section view along a line XI-XI in Fig. 10 showing a main portion of the cartridge.

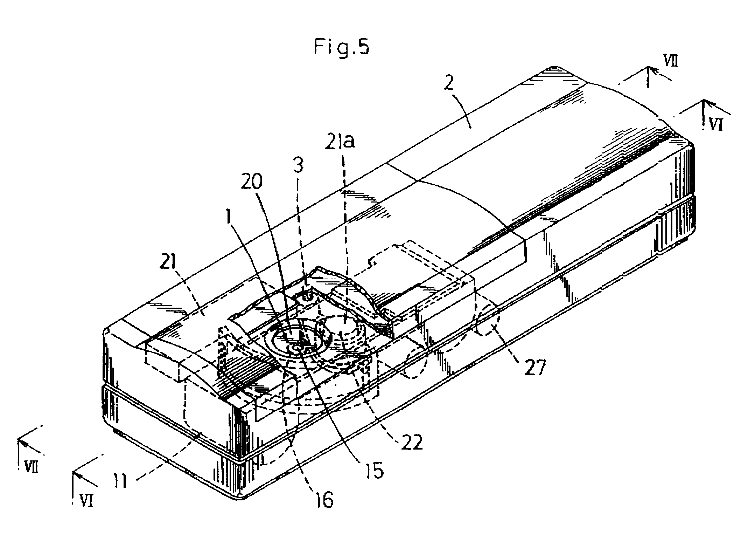

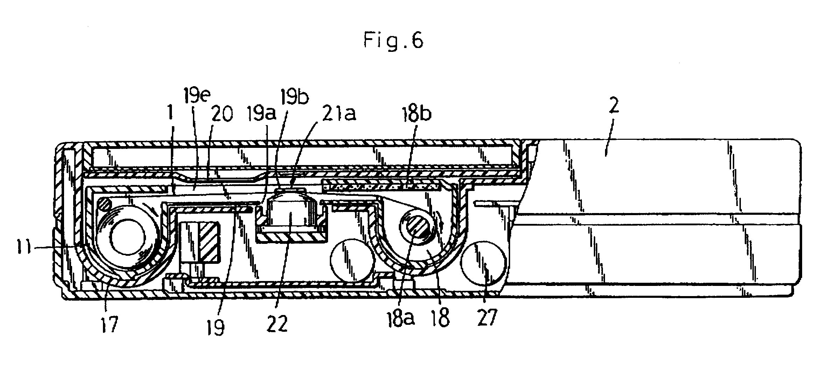

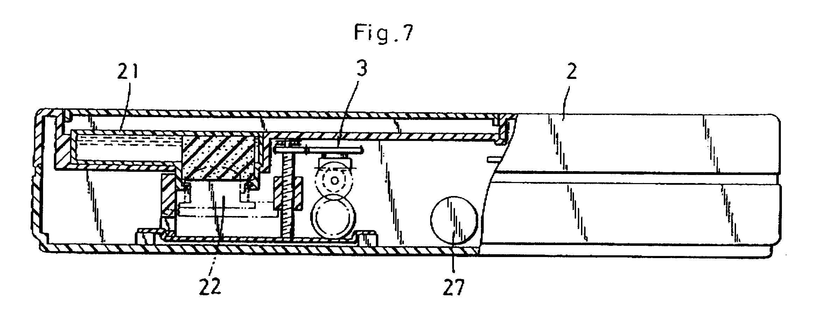

Fig. 5 is a partial section perspective view of a concentration measuring apparatus in accordance with a first embodiment of the present invention, while Figs. 6 and 7 are partial vertical section views thereof.

A casing 2 has inner space at a predetermined position for housing a cartridge 11 in which an elongate film 1 is housed. An opening 20 for depositing test solution is formed in an upstream predetermined position, while measuring portion 21a for permitting an enzyme electrode unit 22 to contact with a diffusion-limiting membrane 16 which is adhered to the elongate film 1 is formed in a downstream predetermined position with respect to the moving path of the elongate film 1. A wetting liquid housing tank 21 is disposed above and spsced from the moving path by a predetermined horizontal distance. An electrode driving mechanism 3 is disposed in the casing 2, the mechanism 3 moving the enzyme electrode unit 22 to and fro between a position to contact the enzyme electrode unit 22 with the elongate film 1 and to a position to contact the enzyme electrode unit 22 with the wetting liquid housing tank 21. A film driving mechanism (not shown) for moving the elongate film 1 is also disposed in the casing 2.

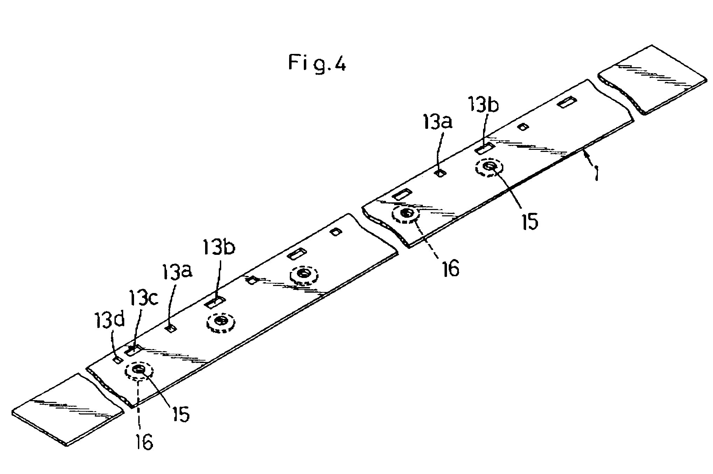

Fig. 4 is a perspective view showing the elongate film 1. Openings 15 for passing through test solution are formed in the central portion of the elongate film 1 at certain predetermined distances. Diffusion-limiting membranes 16 as an assistance membrane for the concentration measurement are adhered to the bottom surface of the elongate film 1 to cover the openings 15. Shorter holes 13a and longer holes 13b are formed in the elongate film 1 at predetermined relative positions to corresponding openings 15 except the last opening 15. A longer hole 13c and a shorter hole 13d are formed in the elongate film 1 at a predetermined relative position to the last opening 15. The elongate film 1 is accurately positioned by detecting the longer and shorter holes with photo sensors (not shown). The elongate film 1 is resistant against the test solutions. The diffusion-limiting membrane 16 has a separating function for interfering substances contained in a test solution which adhered to the diffusion-limiting membrane, a diffusion-limiting function to some degree, and a function for permitting deposition of the test solution without contacting the enzyme electrode unit 22 and the like. It may consist of a poly-carbonate membrane having a plurality of minute pores. When a diffusion-limiting membrane for limiting diffusion of the test substance is secured on to the enzyme electrode unit 22 which will be described later, the diffusion-limiting membrane 16 prevents the diffusion-limiting membrane secured on the enzyme electrode unit 22 from being clogged. The diffusion-limiting membrane 16 may consist of a membrane to sufficiently limit penetration of test substance, and then the diffusion-limiting membrane secured to the enzyme electrode unit 22 may be omitted. Employing the diffusion-limiting membrane 16 for separating interfering particles from test substance as its main function, adhered to the elongate film 1, and the diffusion-limiting membrane for limiting penetration of test substance, secured to the surface of the enzyme electrode unit 22, is preferable and prevents the accuracy of measurement from deteriorating owing to the interfeing particles.

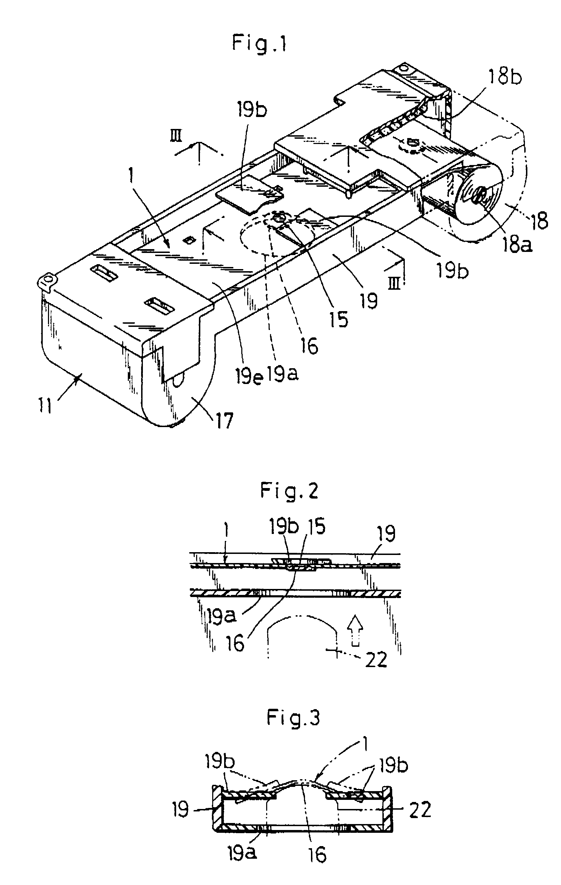

Fig. 1 is a partial section perspective view showing the cartridge in which the elongate film is housed, while Figs. 2 and 3 are cross section views along lines II-II and III-III in Fig. 1 respectively.

The cartridge 11 has a supplying chamber 17 for housing the elongate film 1 in a rolled manner, a receiving chamber 18 for receiving the rolled up elongate film 1 and a bridging member 19 connecting the supplying chamber 17 and the receiving chamber 18. A rotary shaft 18a provided with the receiving chamber 18 is projected therefrom and selectively transmits rotary force from a motor 27. The bridging member 19 is arranged to guide the elongate film 1. The bridging member 19 is open on its top surface to form a large opening 19c and has formed in its bottom surface an opening 19a for allowing the enzyme electrode unit 22 to move upward and enter therein. A pair of inner projections 19b made of plastic or the like are provided at a position level with the upper edge portion of both side plates of the cartridge 11. The length of the inner projections 19b is determined so as to form a clearance between the leading edges of the inner projections 19b, the clearance being slightly smaller than the diameter of the opening 19a. Each inner projection 19b is concaved in arc shape at the center portion of its leading edge, thereby enabling the leading edge to fit to the edge portion of the enzyme electrode unit 22 with the elongate film 1 being located interposed therebetween. A wiping member 18b is secured to the receiving chamber 18.

The measuring of concentrations of test substances using the apparatus of the invention is carried out as follows.

Firstly, a test solution is deposited onto the corresponding diffusion-limiting membrane through the opening 20 when the opening 15 covered by the diffusion-limiting membrane 16 is opposite the opening 20 for deposition. Secondly, the elongate film 1 with the test solution deposited thereon is moved a predetermined distance by the film driving mechanism to be opposite the opening 15 to the measuring portion 21a. Thirdly, the enzyme electrode unit 22 is moved by the electrode driving mechanism 3, whereby the enzyme electrode unit 22 is placed in contact with the diffusion-limiting membrane 16 having the test solution deposited thereon. In this case, though the elongate film 1 is forced to rise by the enzyme electrode unit 22, good contact conditions of the enzyme electrode unit 22 with the diffusion-limiting membrane 16 are obtained (refer to two dots and dash line in Fig. 3) without applying tension to the elongate film especially, because the edge portions of the elongate film 1 in a width direction are controlled by the pair of inner projections 19b.

When good contact between the enzyme electrode unit 22 and the diffusion-limiting membrane 16 is obtained, the test substance in the test solution diffuses to the enzyme electrode unit 22 through the diffusion-limiting membrane 16, whereby an electric signal corresponding to the diffusing quantity of the test substance is output from the enzyme electrode unit 22. The concentration of the test substance in the test solution is accordingly obtained based upon the electric signal.

After the concentration measurement of the test substance in the test solution is finished, the elongate film 1 is moved to locate the next opening 15 on the film adjacent the opening 20 for deposition. Then the next concentration measurement is ready to be carried out.

When the test solution is deposited onto the elongate film 1, the inner projections 19b are securely prevented from becoming wetted with test solution because the inner projections 19b are spaced apart by a predetermined distance from one another. Because the elongate film 1 has no tension applied to it at all, the force which is necessary for moving the elongate film 1 can be decreased.

When concentration measurements of test substances in a test solution were carried out using the concentration measuring apparatus according to this embodiment, CV=2-3% caused by good reproducibility of the contact between the enzyme electrode unit 22 and the diffusion-limiting membrane 16 was obtained. When concentration measurements of test substances in a test solution were carried out using conventional concentration measuring apparatus, the CV was about 10%. As is apparent from the comparison of CV values, the concentration measuring apparatus according to this embodiment remarkably decreases variation of measured concentrations.

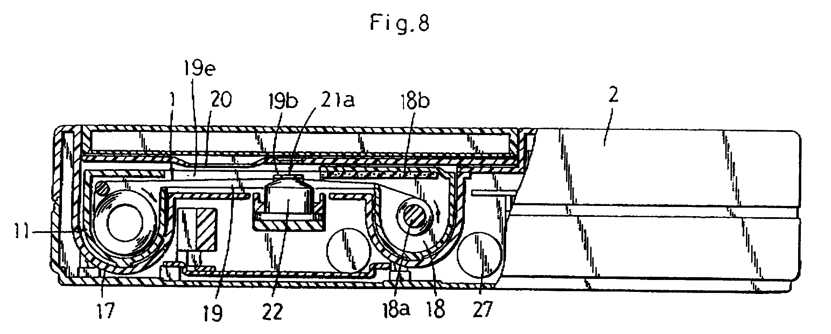

Fig. 8 is a partial vertical section view showing a main portion of the concentration measuring apparatus in accordance with a modified embodiment of the present invention.

This embodiment has a different structure from the embodiment shown in Fig. 6 in that the entire region of the bottom plate of the bridging member 19 is open, instead of opening 19a, for allowing the enzyme electrode unit 22 to enter therein.

When this arrangement is employed, a similar function is performed as the embodiment shown in Fig. 6, and furthermore, manufacturing and operation of the cartridge can be simplified.

### Second Embodiment

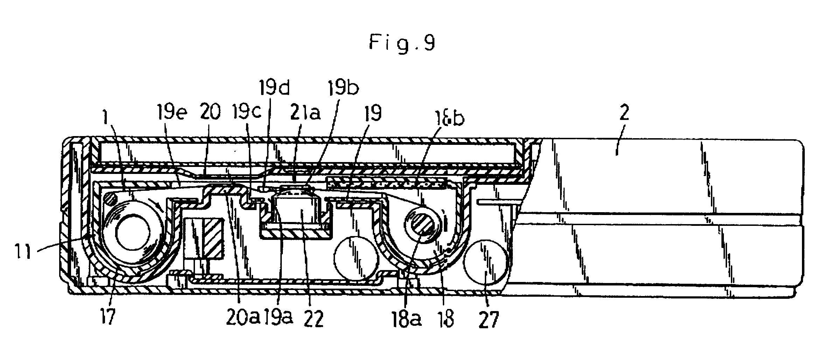

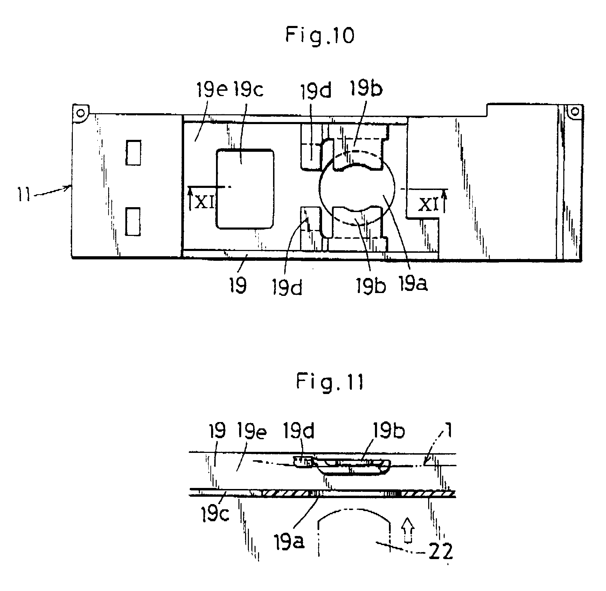

Fig. 9 is a partial vertical section view of a concentration measuring apparatus in accordance with another embodiment of the present invention. Fig. 10 is a plan view of a cartridge. Fig. 11 is a cross section along a line XI-XI in Fig. 10 showing a main portion of the cartridge.

Different features from the foregoing embodiment are as follows.
(1) A raised portion 20a is provided to the main body of the concentration measuring apparatus, located opposite to the opening 20 for deposition.
(2) An opening to accomodate the raised portion 20a is formed at a predetermined position of the bridging member 19.
(3) A pair of assistance inner projections 19d are provided at a position close to the inner projections 19b between the inner projections 19b and the opening 19c.

The pair of assistance inner projections 19d are provided in a condition that base portions of the assistance inner projections 19d for connecting to the bridging member 19 are positioned slightly higher than base portions of the inner projections 19b for connecting to the bridging member 19. The thickness of the assistance inner projection 19d is determned to be greater than that of the inner projection 19b, and the strength of the assistance inner projection 19d is determined to be greater than that of the inner projection 19b. And the thickness of the assistance inner projection 19d is determined so as to locate its bottom surface lower than the bottom surface of the inner projection 19b when viewed in cross section.

When this arrangement is employed, the system for concentration measurement is improved because the deposition operation is carried out in a situation where the elongate film 1 is in the raised portion 20a.

In the case where the raised portion 20a raises the elongate film 1 only at its center portion and the assistance inner projections 19d are not present, contact between the enzyme electrode unit 22 and the diffusion-limiting membrane 16 is less. This is because the forcible raising of the elongate film 1 affects the elongate film 1 in the area between the pair of inner projections 19b owing to controlling the elongate film 1 at its edge portions with the pair of inner projections 19b which have a strength that is not too great. On the other hand, in this embodiment of Fig.10, good contact between the enzyme electrode unit 22 and the diffusion-limiting membrane 16 is obtained because forcibly raising the elongate film 1 is securely prevented from affecting the elongate film 1 between the pair of inner projections 19b owing to providing the pair of assistance inner projections 19d located between the raised portion 20a and the pair of inner projections 19b and by making the strength of the pair of inner projections 19d greater than that of the pair of inner projections 19b.

It is a matter of course that a regulating member having a slightly smaller opening than the diameter of the enzyme electrode unit 22 may be employed in the first embodiment instead of the pair of inner projections 19b. The regulating member may have an arrangement that the pair of inner projections 19b are elongated to be connected one another and the slightly smaller opening is formed at the conter portion thereof. A disk-shaped film may be employed instead of the elongate film 1 in both embodiments. The raised portion 20a may be arranged to move up and down. The assistance membrane may be an enzyme-immobilized membrane, a laminated membrane including a diffusion-limiting membrane and an enzyme-immobilized membrane, or a laminated membrane including a diffusion-limiting membrane, an enzyme-immobilized membrane and a selective penetration membrane for allowing penetration of only substance consumed or generated under the existance of enzyme.

## Claims

1. A concentration measuring apparatus for measuring the concentration of a test substance in a liquid, including:
a main body (2);
an enzyme electrode unit (22) provided in a predetermined position of said main body (2);
a thin film (1) for carrying the test solution;
characterized in that
said enzyme electrode unit (22) is movable up and down in said main body (2);
in said film (1) a plurality of openings (15) are formed at predetermined distances for passing through said test solution;
each opening is covered by an assistance membrane (16) for concentration measurement;
driving means is provided for moving said thin film (1) in a predetermined direction; and
a pair of flexible inner projections (19b) are provided opposite one another in a square crossing direction relative to the moving direction for opposing edge portions of said enzyme electrode unit (22) with said thin film (1) interposed when the concentration of said test substance is to be measured.

2. The concentration measuring apparatus as set forth in claim 1, wherein said flexible inner projections (19b) have a shape corresponding to the shape of the edge portion of an upper portion of said enzyme electrode unit (22).

3. The concentration measuring apparatus as set forth in claim 1, further comprising a raising means (20a) for raising said thin film (1) at a position opposite to an opening (20) for deposition, said opening (20) for deposition being formed at a predetermined position of said main body (2), and a pair of assistance inner projections (19d) provided at position a distance spaced from said inner projections (19b) toward said opening (20) for deposition, said pair of assistance inner projections (19d) being opposite one another in a square crossing direction relative to the moving direction of said thin film (1).

4. The concentration measuring apparatus as set forth in claim 3, wherein said assistance inner projection (19d) has a bottom surface positioned below a bottom surface of said inner projection (19b).

5. The concentration measuring apparatus as set forth in claim 1, further comprising a cartridge (11) for housing said thin film (1) in a movable manner in a predetermined direction, said cartridge (11) having said flexible inner projections (19b) at a predetermined position of an upper portion thereof.

6. The concentration measuring apparatus as set forth in claim 5, wherein said cartridge (11) has an elongate opening (19e) including said opening (20) for deposition at its top surface and has an opening (19a) at its bottom surface for permitting said enzyme electrode unit (22) coming therein.

## Patentansprüche

1. Konzentrationsmeßvorrichtung zum Messen der Konzentration einer Testsubstanz in einer Flüssigkeit, welche enthält:
einen Hauptkörper (2);
eine an einer vorbestimmten Stelle des Hauptkörpers (2) vorgesehene Enzymelektrodeneinheit (22);
einen Dünnfilm (1) zum Tragen der Testlösung;
dadurch gekennzeichnet, daß
die Enzymelektrodeneinheit (22) nach oben und nach unten in dem Hauptkörper (2) bewegbar ist;
in dem Film (1) eine Mehrzahl von Öffnungen (15) in vorbestimmten Abständen zum Durchlassen der Testlösung gebildet ist;
jede Öffnung bedeckt ist durch eine Hilfsmembran (16) zur Konzentrationsmessung;
ein Treibmittel vorgesehen ist zum Bewegen des Dünnfilms (1) in einer vorbestimmten Richtung und
ein Paar von in einer senkrechten Querrichtung relativ zu der Bewegungsrichtung einander gegenüberliegenden biegsamen Innenvorsprüngen (19b) vorgesehen ist zum Entgegensetzen von Kantenabschnitten der Enzymelektrodeneinheit (22) mit dem dazwischenliegenden Dünnfilm (1), wenn die Konzentration der Testsubstanz zu messen ist.

2. Konzentrationsmeßvorrichtung nach Anspruch 1, bei welcher die biegsamen Innenvorsprünge (19b) eine Form aufweisen, welche der Form des Kantenabschnitts eines oberen Abschnitts der Enzymelektrodeneinheit (22) entspricht.

3. Konzentrationsmeßvorrichtung nach Anspruch 1, welche ferner umfaßt: ein Anhebemittel (20a) zum Anheben des Dünnfilms (1) an einer einer Öffnung (20) zur Ablagerung gegenüberliegenden Stelle, wobei die Öffnung (20) zur Ablagerung an einer vorbestimmten Stelle des Hauptkörpers (2) gebildet ist, und ein Paar von Hilfsinnenvorsprüngen (19d), die an einer Stelle in einem von den Innenvorsprüngen (19b) zu der Öffnung (20) zur Ablagerung hin vorgesehenen Abstand vorgesehen sind, wobei die Hilfsinnenvorsprünge (19d) des Paares von Hilfsinnenvorsprüngen (19d) in einer senkrechten Querrichtung relativ zu der Bewegungsrichtung des Dünnfilms (1) einander gegenüberliegen.

4. Konzentrationsmeßvorrichtung nach Anspruch 3, bei welcher der Hilfsinnenvorsprung (19d) eine unter einer Bodenfläche des Innenvorsprungs (19b) angeordnete Bodenfläche aufweist.

5. Konzentrationsmeßvorrichtung nach Anspruch 1, welche ferner eine Patrone (11) zum Aufnehmen des Dünnfilms (1) in einer bewegbaren Art und Weise in einer vorbestimmten Richtung umfaßt, wobei die Patrone (11) die biegsamen Innenvorsprünge (19b) an einer vorbestimmten Stelle ihres oberen Abschnitts aufweist.

6. Konzentrationsmeßvorrichtung nach Anspruch 5, bei welcher die Patrone (11) eine die Öffnung (20) zur Ablagerung enthaltende Längsöffnung (19e) an ihrer obersten Oberfläche aufweist und eine Öffnung (19a) an ihrer Bodenfläche aufweist, welche es erlaubt, daß die Enzymelektrodeneinheit (22) in sie hineinkommt.

## Revendications

1. Appareil de mesure de la concentration destiné à mesurer la concentration d'une substance à analyser dans un liquide, comprenant :
un corps principal (2) ;
une unité d'électrode enzymatique (22) disposée dans une position prédéterminée dudit corps principal (2) ;
un film mince (1) destiné à supporter la solution à analyser ;
caractérisé en ce que
ladite unité d'électrode enzymatique (22) est mobile vers le haut et vers le bas dans ledit corps principal (2) ;
une pluralité d'orifices (15) est formée dans ledit film (1) à des distances prédéterminées afin de laisser passer ladite solution à analyser ;
chaque ouverture est recouverte d'une membrane auxiliaire (16) destinée à mesurer la concentration ;
un moyen d'entraînement est prévu pour déplacer ledit film mince (1) dans une direction prédéterminée ; et
une paire de projections (19b) internes flexibles est prévue à l'opposé l'une de l'autre dans une direction perpendiculaire à la direction du déplacement pour opposer les bords de ladite unité d'électrode enzymatique (22) audit film mince (1) interposé lorsque la concentration de ladite substance à analyser doit être mesurée.

2. Appareil de mesure de la concentration selon la revendication 1, dans lequel lesdites projections (19b) internes flexibles ont une forme correspondant à la forme du bord d'une partie supérieure de ladite unité d'électrode enzymatique (22).

3. Appareil de mesure de la concentration selon la revendication 1, comprenant en outre un moyen de levage (20a) destiné à soulever le film mince (1) dans une position opposée à un orifice (20) pour permettre le dépôt, ledit orifice (20) permettant le dépôt étant formé dans une position prédéterminée dudit corps principal (2), et une paire de projections (19d) internes auxiliaires étant prévue dans une position espacée d'une certaine distance desdites projections (19b) internes vers ledit orifice (20) permettant le dépôt, lesdites deux projections (19d) internes auxiliaires étant opposées l'une à l'autre dans une direction perpendiculaire à la direction du déplacement dudit film mince (1).

4. Appareil de mesure de la concentration selon la revendication 3, dans lequel ladite projection (19d) interne auxiliaire comporte une surface inférieure positionnée sous une surface inférieure de ladite projection (19b) interne.

5. Appareil de mesure de la concentration selon la revendication 1, comprenant en outre une cartouche (11) pour loger ledit film mince (1) dans une relation mobile dans une direction prédéterminée, ladite cartouche (11) ayant lesdites projections (19b) internes flexibles dans une position prédéterminée dans une partie supérieure de celle-ci.

6. Appareil de mesure de la concentration selon la revendication 5, dans lequel ladite cartouche (11) comporte un orifice allongé (19e) comprenant ledit orifice (20) permettant le dépôt à sa surface supérieure et comporte un orifice (19a) dans sa surface inférieure pour permettre à ladite unité d'électrode enzymatique (22) d'y pénétrer.
